# EUROPEAN PATENT SPECIFICATION

(11) **EP 0 977 480 B1**
(45) Date of publication and mention of the grant of the patent: **02.10.2002**
(21) Application number: 96942712.9
(22) Date of filing: 16.12.1996
(51) Int. Cl.: A01N 1/02

(54) **Preservation solution for organs or tissues or parts thereof from humans or animals**
Lösung zur Konservierung von Organen oder Geweben oder Teilen davon aus Menschen oder Tieren
Solution pour la conservation d'organes ou de tissus ou des parties de ceux-ci d'humains ou d'animaux

(30) Priority: 15.12.1995 SE 9504505
(43) Date of publication of application: 09.02.2000
(73) Proprietor: XENODEVICE AKTIEBOLAG, 240 13 Genarp (SE)
(72) Inventor: STEEN, Stig, S-226 50 Lund (SE)
(74) Representative: Bjerre, Nils B.J.
(86) International application number: SE9601664
(87) International publication number: WO97022244

(56) References cited:
- EP-A- 0 580 444
- WO-A-92/18136
- WO-A-96/19918
- DE-A- 3 705 874
- US-A- 5 082 831
- US-A- 5 145 771
- US-A- 5 370 989
- US-A- 5 407 428
- STN INTERNATIONAL, File Medline, Medline Accession No. 96182203, INGEMANSSON R. et al., "Importance of Calcium in Long-Term Preservation of the Vasculature"; & ANNALS OF THORACIC SURGERY, (1966 Apr), 61 (4), 1158-62.
- STN INTERNATIONAL, File HCAPLUS, HCAPLUS Accession No. 1993:595377, HISATOMI, KOUICHI et al., "Beneficial Effect of the Addition of Nitroglycerin to the Cardioplegic Soution on the Cold-stored Reperfused Isolated Rat Heart"; & JPN. CIRC. J., (1993), 57(6), 558-62.
- STN INTERNATIONAL, File HCAPLUS, HCAPLUS Accession No. 1992:503870, MARUYAMA, HIROSHI, "The Studies of Terminal Cardioplegic Solution with Additional Glyceryl Trinitrate (GTN) After Hypothermic Simple Immersion of Rat Heart"; & KURUME IGAKKAI ZASSHI, (1992), 5 (2/3), 197-207.
- DATABASE WPI Week 199518, Derwent Publications Ltd., London, GB; Class B05, AN 1995-137950 & SU 1 836 905 A1 (NIZHEGOROD TRAUMATOLOGY ORTHOPAEDICS RES) 30 August 1993
- OMACHI ET AL: 'Inhibition of the calcium paradox in isolated rat hearts by high perfusate sucrose concentrations' AMERICAN JOURNAL OF PHYSIOLOGY vol. 266, 1994, pages H1729 - H1737
- MENASCH ET AL: 'Improved recovery of heart transplants with a specific kit of preservation solutions' THE JOURNAL OF THORACIC AND CARDIOVASCULAR SURGERY vol. 105, no. 2, 1993, pages 353 - 363
- DRÜEKE ET AL: 'Effects of hyperoncotic albumin and parathyroid hormone infusion on jejunal electrolyte and water absorption in the rat' PFLÜGERS ARCHIV, EUROPEAN JOURNAL OF PHYSIOLOGY vol. 373, 1978, pages 249 - 257
- INGEMANSSON ET AL: 'Long-term preservation of vascular endothelium and smooth muscle' THE ANNALS OF THORACIC SURGERY vol. 59, no. 5, May 1995, pages 1117 - 1181
- WALKENBACH ET AL: 'The effects of UW solution and its components on corneal thickness during and after storage' CURRENT EYE RESEARCH vol. 10, no. 12, 1991, pages 1129 - 1136
- LINDELL ET AL: 'Hypothermic perfusion of rabbit livers: effect of perfusate composition (Ca and lactobionate) on enzyme release and tissue swelling' CRYOBIOLOGY vol. 26, 1989, pages 407 - 412

## Description

### Field of the Invention

The present invention relates to a preservation solution for organs and tissues or parts thereof from humans and animals, containing dextran, glucose, electrolytes and a buffer.

### Background Art

In coronary artery surgery (about 800 operations per one million inhabitants a year) and in the peripheral vascular surgery (about 100 operations per one million inhabitants a year), use is today in most European clinics made of so-called physiological saline solution (0.9% NaCl) as solution for washing away blood from blood-vessel transplants and for storing blood-vessel transplants before inserting them in their new positions. In coronary artery surgery use is generally made of the vena sapena magna, i.e. the superficial vein extending from the inside of the foot over the inner ankle and along the inside of the lower leg and the thigh-bone to the groin, where it joins the thigh vein (vena femoralis). In a coronary artery operation, first the vena sapena magna in one leg is removed, while the breastbone is opened and preparatory measures are taken for connection to a heart-lung machine. After removal of the vena sapena magna, this blood vessel is flushed with saline solution of the above-mentioned type, on the one hand to wash away all blood from the inside of the vessel and, on the other hand, to ensure that one has not neglected to ligate any branch of the vein, i.e. to tie the branches with a thread with a view to preventing leakage therethrough. Subsequently, the removed vein is placed in a dish containing saline solution of room temperature, i.e. 20-25°C.

Then the heart-lung machine is connected and cardioplegia is given to the heart. About 15-20-cm-long segments are cut off from the vein in the dish and are sewn as a so-called aortacoronary vein bypass to the sick coronary arteries. Before all vessel transplants are sewn and the blood again circulates through these, a period of up to 2 h may have passed. For patients who are to have one or two cardiac valves inserted as well, this period can be still longer. Instead of storing the vessel transplants in saline solution before being sewn, some surgeons use the patent's own blood. Blood is then drawn off from the patient and is placed in a dish. The transplant is then allowed to lie in this blood before being sewn to the heart. First the temperature is 37°C but rapidly falls to room temperature. It is considered that since blood is the medium to which the vessel is exposed throughout life, this must be the ideal storage medium for a vascular transplant.

In heart surgery, the coronary artery surgery constitutes about 70% of the operations on adults. It is well-known from studying experiments on animals that when a vascular transplant is used where the endothelium is destructed, so-called intimal hyperplasia is released and the transplants are occluded after some time (the vascular lumen becomes smaller and smaller and at last the flow of blood is stopped completely). In clinical follow-up studies, it has been found that 5 years after a coronary artery operation about 30-50% of the venous transplants have been occluded, and when these are studied histologically, a pronounced intimal hyperplasia will be discovered. This thus applies to venous transplants which have been rinsed and stored in the above-mentioned physiological saline solution.

Japanese Circulation Journal, (1993), 57(6), 558-562, Hisatomi et al, describes the beneficial effect of the additional nitroglycerin to the cardioplegic solution on the cold-stored reperfused isolated rat heart.

STN INTERNATIONAL, File HCAPLUS, HCAPLUS Accession No. 1992:503870, MARUYAMA, HIROSHI, refers to a terminal cardioplegic solution with additional glyceryltrinitrate (GTN) after hypothermic simple immersion of rat.

US-A-5370989 describes an aqueous solution for organ preservation or maintenance including, inter alia, a vasodilator, D-glucose, magnesium and macromolecules with a molecular weight of more than 20,000 daltons, potassium ions and a buffer.

WO-A-9218136 describes blood substitutes and organ preservative solutions which may be used to perfuse a living or non-living subject in need of perfusion.

DERWENT ABSTRACT, No. 95-137950/18, Week 9518; & SU-A-1 836 905 (NIZHEGOROD TRAUMATOLOGY ORTHOPAEDICS RES), 9 January 1991, describes preservation of demineralized bone transplants by immersion in calcium chloride solution and storage in urea solution.

US-A-5082831 describes improved aqueous assanguineous perfusates, blood substitutes for profound hyperthermia and a method of using the same.

US-A-5145771 describes a rinse solution for organs and tissues selected for transplantation.

The applicant's research team has intensely studied both short-term and long-term preservation of blood vessels. Regarding short-term preservation of blood vessels, i.e. up to 2 h preservation, it has been found that a physiological saline solution is toxic to the vascular endothelium. If a saline solution is flushed through e.g. the arteria iliaka of a rat, intimal hyperplasia can be found in the vessel after about one month. If, on the other hand, serum is used for rinsing correspondingly, no intimal hyperplasia will be discovered. Thus, the use of a physiological saline solution as preservation solution is not favourable to the blood vessels. All the same and in the absence of a better alternative, the clinical use of physiological saline solution, however, continues in most thoracic surgery centres throughout the world.

The applicant's research team has also demonstrated that also blood is not satisfactory as preservation solution. Blood of room temperature which is stored in a dish and is not oxygenated is extremely toxic to the endothelia of the blood vessels and inhibits the endothelial function to a considerable extent. This may seem to be a paradox, but since blood is an organ that has its normal function only when it is moving and is continuously oxygenated in the lungs, it cannot function in the normal manner. Deoxygenated, not moving blood contains, like all other blood, white and red blood corpuscles and thrombocytes. It is well known that white blood corpuscles are activated in case of hypoxaemia (low concentration of oxygen) and then produce toxic substances. The applicant's research team has demonstrated that Ringer's lactate, Kreb's solution and an LPD ("low potassium dextran") solution could preserve blood vessels for 2 h, both at refrigerator temperature (4°C) and room temperature (20°C). However, of these three solutions, only the LPD solution contains a colloidal-osmotically active substance, viz. dextran 40, a large sugar molecule of an average molecular weight of about 40 000 daltons. The colloidal osmotic pressure is the "suction pressure" that protein molecules and other bigger molecules which cannot pass the capillary membrane exert so as to retain fluid in the capillaries. This LPD solution, which will be defined in more detail below, thus has a colloidal osmotic pressure which is slightly higher than that of normal plasma. In a series of studies, other scientists have demonstrated that dextran 40 is favourable for preventing thrombosis by covering the endothelium, which means that activated white blood corpuscles cannot get stuck with their receptors and thus invade and consequently destruct the vessel. In long-term preservation of blood vessels, i.e. more than 24 h, for instance 36 h, Ringer's lactate or Kreb's solution cannot affect the blood vessel in a sufficiently satisfactory manner. However, the LPD solution produced a better effect.

In the remaining clinical organ transplantation today, two organ preservation solutions are prevalent, i.e. the so-called University of Wisconsin solution and the Euro-Collins solution. These solutions are so-called intracellular preservation solutions, i.e. they have a high potassium content and a low sodium content. The purpose of this composition is that the cells should be allowed to "swim" in an intracellular environment. The applicant's research team has, however, after extensive studies demonstrated that in respect of blood vessels, the high potassium content of these intracellular solutions causes a violent vascular spasm. Therefore there is no logic in using preservation solutions of intracellular electrolyte composition when storing vascular transplants.

In heart surgery, a continuously increased use of so-called homotransplants, i.e. from one individual to another of the same species, has recently become common. This means that blood vessels are removed from recently deceased individuals, in most cases in institutes of forensic medicine, and after a short-term storage, these blood vessels are cryopreserved, i.e. they are stored in fluid nitrogen at low temperatures. In heart transplantations it is in many cases also possible to make use of the aortic root including the valve apparatus of the heart that are to be removed and discarded in any case. At present, this preparation is placed in a saline solution until it is being taken care of the next day to be cryopreserved.

In plastic surgery, the extent of microsurgical procedures increases, in which parts of organs, including blood vessels, are moved from one place in the body to another, i.e. autotransplantations. Also in this part of surgery, there is a need of a satisfactory preservation solution for the vascular system in the organs involved, such that when the organ is inserted, a perfect circulation of the blood can be established when the flow of blood is started.

A further problem, which has recently been discovered, is that in reperfusion of a transplanted organ or blood vessel, injuries to the cells may arise owing to detrimental free oxygen radicals within a few seconds up to some minutes after the implantation.

Summing up, there is thus at present no quite satisfactory preservation solution available for organs and tissues or parts thereof from humans and animals, especially for blood vessels, which are to be transplanted or stored for some other purpose, for instance for medical studies. In these fields, there is thus a great global need of a preservation solution which does not have the drawbacks of existing preservation solutions and which preserve the original structures and functions of the organ, the tissue or parts thereof to a much greater extent and for a considerably longer period of time.

### Object of the Invention

The object of the present invention is to eliminate the above drawbacks of existing preservation solutions for organs and tissues or parts thereof from humans and animals.

This object is achieved by a preservation solution of the type mentioned by way of introduction, which besides contains calcium and nitroglycerine. Further features are stated in the appended claims.

The present invention also relates to use of the preservation solution, and to a method for preserving organs and tissues or parts thereof from humans and animals in the preservation solution.

### Description of the Drawings

Fig. 1 shows comparative tests between preservation solutions containing the combination of calcium and nitroglycerine and these ingredients separately, and
Fig. 2 shows the effect of calcium on muscle cells and endothelial cells in blood vessels.

### Description of the Invention

The applicant's research team has, after extensive studies and experiments, arrived at the surprising and seemingly contradictory result that calcium has a previously not shown potent function in long-term preservation of, above all, blood vessels and can preserve the smooth muscle function in blood vessels for up to 36 h.

It has for a long time been considered that calcium should not be present in preservation solutions for transplants. The reason for this is that in case of ischaemia, i.e. localised lack of oxygen in a tissue, the intracellular calcium concentration rises, and therefore one did not want to add further calcium so as to make this available to the cells. The applicant's research team has, however, carried out comparative studies showing that long-term preservation of blood vessels in calcium-free solutions is destructive to the blood vessel involved. The presence of calcium is necessary in the solution, among other things for maintaining the integrity of the vascular endothelium. The vascular endothelium contains hydrocarbon chains which are bound to proteins in the cell membranes, and these constitute a so-called layer of glycocalyx. This is a thin layer of a mucous substance (composed of sugars) which is considered to enclose the cell membranes and which is important to the properties of immunity of the cell and makes the cell wall permeable. These hydrocarbon chains are bound together by, among other things, calcium. If the vascular endothelial cells are subjected to calcium-free solutions for a long time, a disintegration of the important layer of glycocalyx is assumed to take place, and the function of the endothelium thus cannot be perfect. Evidence of these discoveries has been obtained through electron microscope studies of cell membranes in blood vessels that have been stored in preservation solutions with and without calcium.

Moreover the applicant's research team has found that the endothelial function in blood vessels can be maintained in a surprising manner by adding nitroglycerine to the preservation solution. Nitroglycerine probably constitutes a substrate for nitrogen oxide, NO, i.e. the endogenous substance that is produced in the endothelium and that constitutes one of the so-called endothelium-dependent relaxation factors (EDRF).

In a comparative experiment with LPD solutions containing calcium and nitroglycerine, respectively, and an LPD solution containing both calcium and nitroglycerine, it has been found that a still better preservation of the EDRF function could be achieved in the presence of nitroglycerine in the solution.

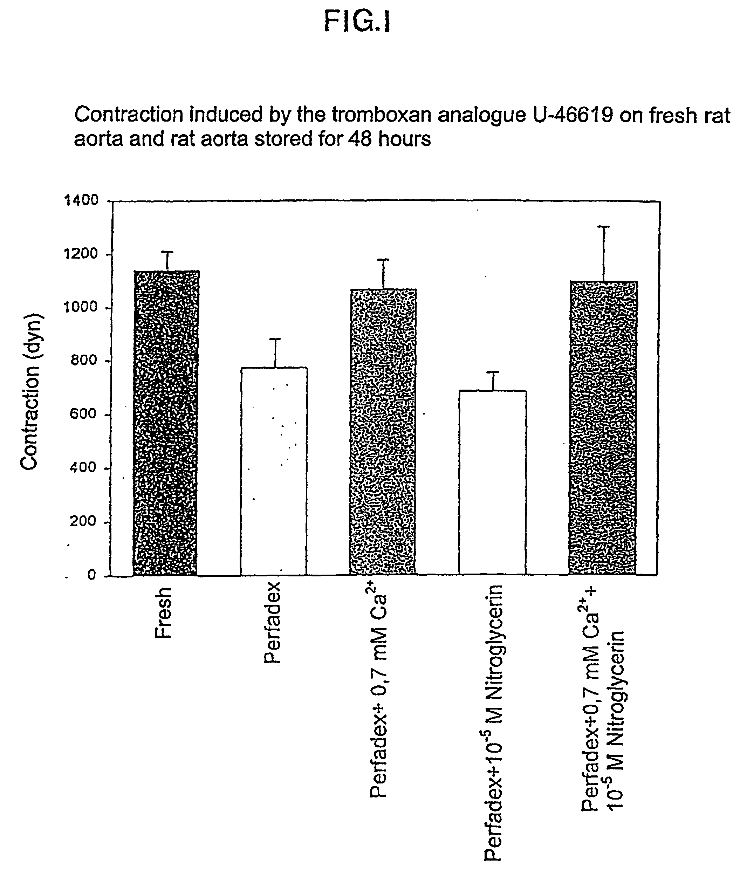

As shown in Fig. 1, the combination of calcium and nitroglycerine in a transplantation solution for storing a rat aorta gives better results in respect of contraction than if the solution does not contain either calcium or nitroglycerine. The use of calcium in the absence of nitroglycerine in a preservation solution according to the present invention yields, in itself, a much better effect than that achieved by using prior art preservation solutions. In combination with nitroglycerine, a still better effect is obtained. Even if the effect of calcium and nitroglycerine in combination is not considerably higher than the effect of calcium in the absence of nitroglycerine, every improvement of the effect in this field is very important for the subsequent transplantation to be as successful as possible.

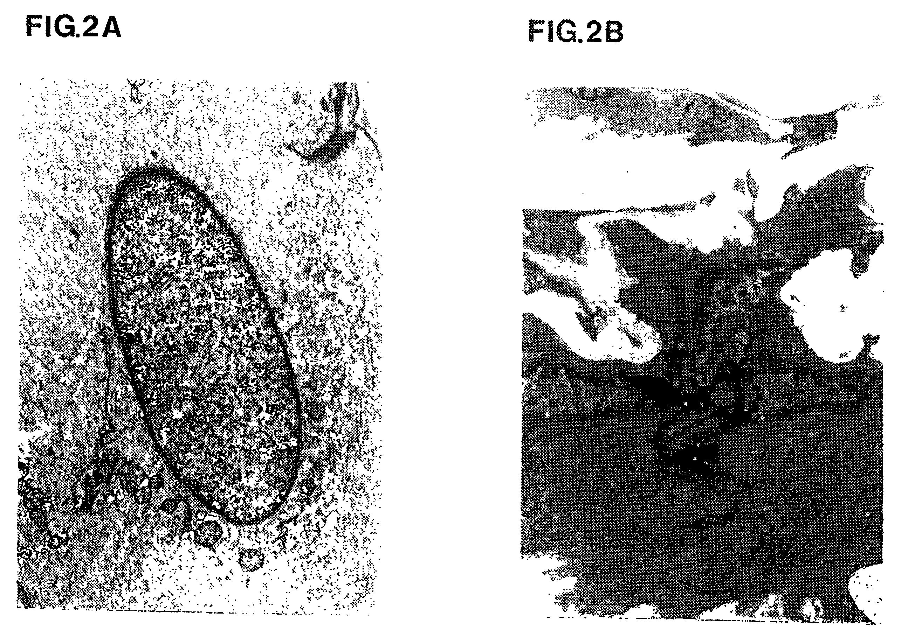

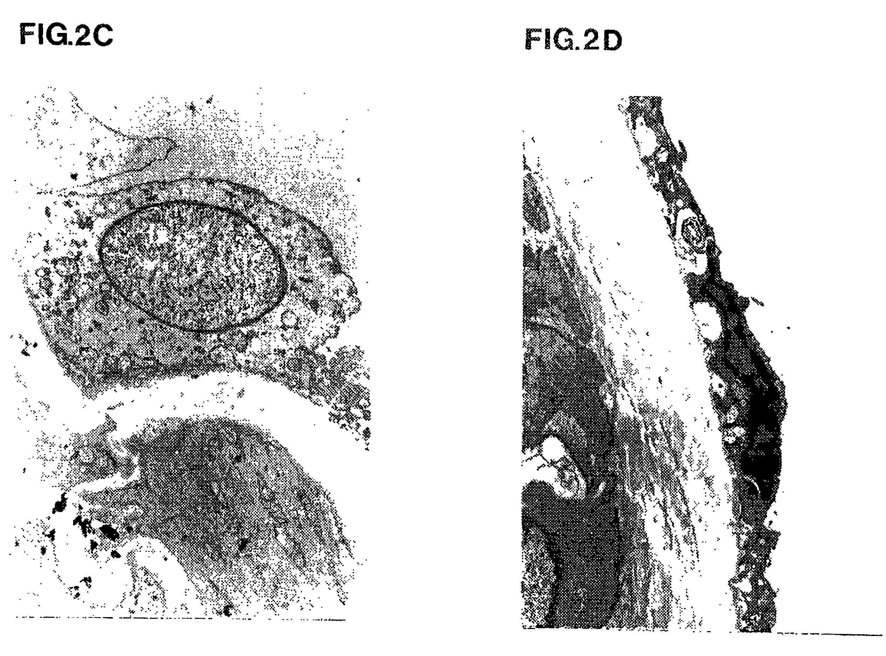

Morphological pictures concerning the satisfactory and unexpected effect of calcium are shown in Fig. 2. The pictures show on the one hand smooth muscular cells from blood vessels and, on the other hand, endothelial cells from blood vessels that have been stored for a long time with or without calcium. In case of preservation without calcium (a: smooth muscular cell and c: endothelial cell), there appears an enormous swelling of the nuclei and the cytoplasm in both types of cells. In case of preservation with calcium, normal structures of the cells appear (b: smooth muscular cell and c: endothelial cell).

Nitroglycerine has also been found to have an important effect in the reperfusion of the blood vessel or the organ after implantation. Cell injuries may in fact arise within a few seconds up to a minute or two after the implantation by the forming of free oxygen radicals. The nitroglycerine has a so-called scavenging effect on these radicals and must be present directly in the implantation operation to reduce this problem. This requirement is satisfied by the nitroglycerine being included, together with calcium, in the preservation solution according to the present invention, in which it also exerts its favourable combination effect on the endothelium.

The expression "organs and tissues or parts thereof from humans and animals" as used throughout the patent application concerns in its widest sense any type of organ and tissue structure that has been obtained from animals and humans and that preferably can be transplanted to humans and animals by autotransplantation, syngeneic transplantation, allotransplantation and xeno-transplantation (for instance organs from pig and monkey to humans). The preservation solution according to the invention is particularly suited for blood vessels or parts thereof and lungs. By the term "blood vessel" is thus meant veins, arteries and capillaries including the aortic root with valve apparatus and the pulmonary root with valve apparatus (so-called homografts). Extensive studies of the preservation of other parts of the body than blood vessels, lungs and kidneys have not yet been carried out, but there is at present nothing that indicates that such organs would be affected detrimentally by preservation in the solution according to the invention. However, for the preservation of hearts, specific concentrations of electrolytes in the preservation solution are necessary, which will be evident from the following.

The term "transplant" used throughout the patent application, also called graft, concerns organs and tissues or parts thereof according to the above definition that are to be transplanted in any of the manners as mentioned.

The term "preservation solution" used throughout the patent application concerns the solution or liquid in which the above-mentioned organs and tissues or parts thereof are to be stored, for instance before transplantation. The preservation solution is, as mentioned above, also intended to be used for preservation without subsequent transplantation, for instance for different kinds of examinations and studies.

In a preferred embodiment, the inventive preservation solution contains, in addition to calcium and nitroglycerine, also about 5-15, preferably about 7-12% by weight low-molecular dextran having an average molecular weight of about 1 000 daltons (e.g. dextran 1), about 3-8% by weight high-molecular dextran (e.g. dextran 40, dextran 60, dextran 70 or higher, such as dextran 120), about 0.1-2.6% glucose, buffer (e.g. phosphate, THAM or hydrogen carbonate), about 4-25 mM potassium, about 1-16 mM magnesium, about 50-150 mM sodium and about 50-150 mM chloride. 5% by weight dextran 1 theoretically results in an osmolarity of about 50 milliosmoles. When this is added to the solution, the concentration of electrolytes (for instance sodium and chlorine) must be reduced so as to prevent the solution from becoming hyperosmolar.

In a further preferred embodiment of the invention, the preservation solution contains, in addition to calcium and nitroglycerine, also a Perfadex solution, which is commercially available. The Perfadex solution contains 50 g/l dextran 40 of an average molecular weight of 40 000 daltons, 5 mM glucose, phosphate buffer which gives a phosphate content of 0.8 mM, 6 mM potassium, 0.8 mM magnesium, 138 mM sodium, 142 mM chlorine and 0.8 mM sulphate and an addition of THAM buffer such that a pH of about 7.4 is obtained.

All the above-mentioned contents are based on the final preservation solution.

Regarding the preservation of hearts in the preservation solution according to the present invention, the potassium content must be increased to about 16-25, preferably to 20 mM, and the magnesium concentration to about 12-16 mM. The concentration of sodium then decreases such that the osmolarity of the solution does not exceed about 340 milliosmoles per litre. When storing other organs and tissues, the potassium concentration usually is about 4-6 mM and the magnesium concentration usually is about 1-4 mM, based on the final preservation solution.

The Perfadex solution, which is one type of the above-mentioned LPD solution, has previously been found to function as long-term preservation liquid for transplants, especially kidneys, before transplantation. Perfadex is a so-called extracellular solution, i.e. having a sodium and potassium concentration which is about the same as that in plasma. The phosphate buffer and the THAM buffer therein have a great buffering capacity and give the solution a pH of 7.4. The glucose functions as substrate in the metabolism, and dextran 40 gives the solution a colloidosmotic pressure corresponding to that of normal plasma.

All greater dextran molecules, such as from dextran 40 and upwards, suffer from the drawback that when administered, they may cause anaphylactic reactions. Only small amounts of these molecules suffice to cause these fatal reactions. Low-molecular dextran, for instance dextran 1, also called Promiten, is therefore administered to patients in these contexts with a view to counteracting this reaction. The risk of such anaphylactic reactions is eliminated by the preservation solution according to the invention containing low-molecular dextran.

However, the Perfadex solution does not in itself have satisfactory properties in respect of maintaining the smooth muscle function and the endothelial function in blood vessels.

The addition of calcium and nitroglycerine to Perfadex results, however, in a significant improvement of the properties of the preservation solution in respect of maintaining these functions in long-term preservation.

In the preservation solution according to the present invention, calcium is present in a concentration of 0.3-1.5 mM, preferably about 0.7 mM, based on the final preservation solution. Calcium can be added separately during the preparation of the preservation solution in the form of a solution, for instance an aqueous solution, of calcium or is added in solid state, such as a salt, preferably CaCl₂, the negatively charged ion in the salt being such as not to detrimentally affect the properties of the preservation solution.

In the preservation solution according to the present invention, nitroglycerine is present in a concentration of 10⁻⁴-10⁻⁷ M, preferably about 10⁻⁵-10⁻⁶ M, based on the final solution. Nitroglycerine can be added separately during the preparation of the solution, either in the form of a solution or in solid state. A usable alternative to nitroglycerine is a preparation called Nipride, whose active ingredient is nitroprusside, e.g. in the form of nitroprusside sodium. Another alternative to nitroglycerine is papaverine.

According to the present invention, also heparin can optionally be added to the preservation solution in a concentration of 1-12 IE/ml, preferably 10 IE/ml, based on the final preservation solution. Heparin is used for the purpose of preventing coagulants from forming on the inside of the vascular transplant in case it should be impossible to wash away all blood when removing the organ. Moreover, extensive studies have shown that heparin is not toxic to the endothelial function. As an alternative to common heparin, a so-called low-molecular heparin, preferably fragmin (Dalteparin), can be used.

Besides, antibiotics can optionally be added to the preservation solution according to the present invention. An example of usable antibiotics is benzyl penicillin in a concentration of about 120 mg/l.

All ingredient in the preservation solution according to the invention, also the optional ones, can be added separately and in any order whatever. In a preferred embodiment, calcium, nitroglycerine and optionally heparin and/or an antibiotic are added to a ready-mixed solution, e.g. Perfadex, containing the remaining ingredients for producing the preservation solution.

When used, the pH of the preservation solution should be kept in a range of about 7.4-7.6. Any buffer whatever that yields the necessary pH and that does not detrimentally affect the function of the preservation solution can be used.

The inventive preservation solution is ideal for its purposes by containing the following ingredients and having the following functions:
1) extracellular composition of electrolytes including calcium, i.e. no electrolytes causing vascular spasm,
2) an effective buffer system that can keep a pH of about 7.4-7.6,
3) colloidosmotically active substances (e.g. high-molecular dextran), which can give the solution a colloidosmotic pressure corresponding to that of plasma, i.e. 25 mm Hg or higher, when necessary,
4) a low-molecular, but cell-membrane-impermeable substance (e.g. 5-15% dextran 1), which can give the solution an osmolarity in the range of 50-150 milliosmoles,
5) an efficiently vasodilating substance, e.g. nitroglycerine, nitroprusside or papaverine,
6) a coagel-inhibiting additive, e.g. heparin or fragmin (Dalteparin),
7) glucose for the metabolism during the term of preservation,
8) optionally an antibiotic which is not tissue-toxic in long-term preservation, and
9) increased potassium and magnesium contents for the storing of hearts.

In relation to prior art preservation solutions for organs and/or tissues which, for instance, are to be transplanted, the preservation solution according to the present invention thus contains two new active ingredients which each separately, and especially in combination, in a surprising manner favourably affect the organs and/or tissues during preservation. The effects of these two ingredients, i.e. calcium and nitroglycerine, are not previously known in this context, and make the inventive preservation solution a globally seen very promising preparation.

The inventive preservation solution can be held in any conventional container that is suitable in the art.

The invention further relates to a method for preserving organs and tissues or parts thereof from humans and animals in a preservation solution according to the invention, the organ and tissue or parts thereof being flushed with and immersed in the preservation solution, and the temperature of the preservation solution being adjusted in the range of 4-24°C for a time of at most about 2 h for short-term preservation, or at a temperature in the range of 0.5-8°C for at most 36 h for long-term preservation.

The organ, tissue or parts thereof from humans and animals that have been removed from the donor involved should, if possible, be flushed in situ and/or as soon as possible after that be placed in the preservation solution for minimising detrimental effects, if any.

The optimal storing temperature for the inventive preservation solution is completely dependent on the planned storing time. In case of e.g. short-term preservation of blood-vessels, i.e. up to 2 h, the optimal temperature is room temperature. Too low temperatures are not optimal for the endothelium, but it resists down to 4°C fairly well. After about 2 h reperfusion in vivo after the transplant has been fixed, the endothelial function has been restored completely. When decreasing the temperature to 1°C, the function of the endothelium will be deteriorated and is not restored after 2 h, but after 24 h. For long-term preservation, it is thus an absolute requirement that the temperature be low. 0.5-8°C, preferably 4°C, has been found to be most advantageous. Different organs have a specific optimal storing temperature when stored up to 36 h.

In the EU alone, having more than 400 million inhabitants, for instance more than about 300 000 coronary bypass operations are performed each year, and in Sweden about 7 000 a year. In the USA, this type of operations is the most common operation in all categories. A preservation solution according to the present invention should, for instance, also be available for taking care of homotransplants in institutes of forensic medicine. As mentioned above, there is also a great need of storing blood vessels in a satisfactory preservation solution until they can be cryopreserved the next working day. In peripheral vascular surgery and in plastic and reconstruction surgery, there is also a need of having such a preservation solution.

## Claims

1. A preservation solution for organs and tissues or parts thereof from humans and animals, **characterised in that** it contains calcium, at least one colloidosmotically active substance, and nitroglycerine.

2. The preservation solution as claimed in claim 1 **characterised in that** it contains 0.3-1.5 mM calcium and 10⁻⁴-10⁻⁷ M nitroglycerine, based on the final preservation solution.

3. The preservation solution as claimed in claim 2, **characterised in that** it contains 0.7 mM calcium and 10⁻⁵-10⁻⁶ M nitroglycerine, based on the final preservation solution.

4. The preservation solution as claimed in any one of the preceding claims, **characterised in that** it optionally also contains 1-12 IE/ml heparin and/or 120 mg/l antibiotic, preferably benzyl penicillin, based on the final preservation solution.

5. The preservation solution as claimed in any one of the preceding claims, **characterised in that** calcium and nitroglycerine, and optionally heparin and/or an antibiotic, are present in a solution containing 5-15% by weight low-molecular dextran having an average molecular weight of about 1 000 daltons, 3-8% by weight high-molecular dextran having an average molecular weight of 40 000-120 000 daltons as a colloidosmotically active substance, 0.1-2.6% glucose, buffer, 4-25 mM potassium, 1-16 mM magnesium, 50-150 mM sodium and 50-150 mM chloride, based on the final preservation solution.

6. The preservation solution as claimed in any one of claims 1-5, **characterised in that** calcium and nitroglycerine, and optionally heparin and/or an antibiotic, are present in a solution containing 50 g/l dextran 40 having a molecular weight of 40 000 daltons, 5 mM glucose, 0.8 mM phosphate buffer, 6 mM potassium, 0.8 mM magnesium, 138 mM sodium, 142 mM chlorine and 0.8 mM sulphate, 0.24 ml THAM buffer also being added, based on the final preservation solution.

7. The preservation solution as claimed in any one of the preceding claims, **characterised in that**, when a heart is to be stored in the preservation solution, the concentration of potassium is 16-25 mM, and the concentration of magnesium is 12-16 mM, based on the final preservation solution.

8. The preservation solution as claimed in any one of the preceding claims, **characterised in that** its pH is 7.4-7.6.

9. The preservation solution as claimed in any one of the preceding claims, **characterised in that** heparin is replaced by a low-molecular heparin, preferably fragmin.

10. The preservation solution as claimed in any one of the preceding claims, **characterised in that** the colloidosmotically active substance is a high-molecular dextran, preferably dextran 40, dextran 60, dextran 70, or dextran 120.

11. Use of a preservation solution as claimed in any one of the preceding claims, **characterised in that** organs and tissues or parts thereof from humans and animals, which are to be transplanted to humans and animals, are flushed with and immersed in the preservation solution.

12. Use as claimed in claim 11, **characterised in that** blood vessels or parts thereof are flushed with and immersed in the preservation solution.

13. Use as claimed in claim 11, **characterised in that** vena sapena magna or parts thereof are flushed with and immersed in the preservation solution.

14. Use as claimed in claim 11, **characterised in that** lungs are flushed with and immersed in the preservation solution.

15. A method for preserving organs and tissues or parts thereof from humans and animals, **characterised in that** the organ and the tissue are flushed with and immersed in a preservation solution as claimed in any one of claims 1-10 and stored at a temperature of 0.5-8°C for at most 36 h for long-term preservation, or at a temperature of 4-24°C for at most 2 h for short-term preservation.

## Patentansprüche

1. Konservierungslösung für Organe und Gewebe von Menschen und Tieren, oder Teile davon, **dadurch gekennzeichnet, dass** sie Calcium, wenigstens eine kolloidosmotisch aktive Substanz und Nitroglycerin enthält.

2. Konservierungslösung nach Anspruch 1, **dadurch gekennzeichnet, dass** sie, basierend auf der Endkonservierungslösung, 0,3-1,5 mM Calcium und 10⁻⁴ - 10⁻⁷ M Nitroglycerin enthält.

3. Konservierungslösung nach Anspruch 2, **dadurch gekennzeichnet, dass** sie, basierend auf der Endkonservierungslösung, 0,7 mM Calcium und 10⁻⁵ - 10⁻⁶ M Nitroglycerin enthält.

4. Konservierungslösung nach einem der vorhergehenden Ansprüche, **dadurch gekennzeichnet, dass** sie, basierend auf der Endkonservierungslösung, wahlweise ebenfalls 1-12 IE/ml Heparin, und/oder 120 mg/l eines Antibiotikums, bevorzugt Benzylpenicillin, enthält.

5. Konservierungslösung nach einem der vorhergehenden Ansprüche, **dadurch gekennzeichnet, dass** Calcium und Nitroglycerin und wahlweise Heparin und/oder ein Antibiotikum in einer Lösung vorhanden sind, welche, basierend auf der Endkonservierungslösung, 5-15 Gew.-% niedermolekulares Dextran mit einer mittleren relativen Molekülmasse von etwa 1.000 Dalton, 3-8 Gew.-%, hochmolekulares Dextran mit einer mittleren relativen Molekülmasse von 40.000-120.000 Dalton als eine kolloidosmotisch aktive Substanz, 0,1-2,6% Glucose, Puffer, 4-25 mM Kalium, 1-16 mM Magnesium, 50-150 mM Natrium und 50-150 mM Chlorid enthält.

6. Konservierungslösung nach einem der Ansprüche 1-5, **dadurch gekennzeichnet, dass** Calcium und Nitroglycerin, und wahlweise Heparin und/oder ein Antibiotikum in einer Lösung vorhanden sind, welche, basierend auf der Endkonservierungslösung, 50 g/l Dextran 40, mit einer mittleren Molekülmasse von 40.000 Dalton, 5 mM Glucose, 0,8 mM Phosphatpuffer, 6 mM Kalium, 0,8 mM Magnesium, 138 mM Natrium, 142 mM Chlor und 0,8 mM Sulfat, ebenfalls hinzugefügt 0,24 ml THAM-Puffer, enthält.

7. Konservierungslösung nach einem der vorhergehenden Ansprüche, **dadurch gekennzeichnet, dass**, falls ein Herz in der Konservierungslösung zu lagern ist, die Kaliumkonzentration 16-25 mM und die Magnesiumkonzentration 12-16 mM, basierend auf der Endkonservierungslösung, ist.

8. Konservierungslösung nach einem der vorhergehenden Ansprüche, **dadurch gekennzeichnet, dass** ihr pH-Wert 7,4-7,6 ist.

9. Konservierungslösung nach einem der vorhergehenden Ansprüche, **dadurch gekennzeichnet, dass** das Heparin durch ein niedermolekulares Heparin, bevorzugt Fragmin, ersetzt wird.

10. Konservierungslösung nach einem der vorhergehenden Ansprüche, **dadurch gekennzeichnet, dass** die kolloidosmotisch aktive Substanz ein hochmolekulares Dextran ist, bevorzugt Dextran 40, Dextran 60, Dextran 70 oder Dextran 120.

11. Verwendung einer Konservierungslösung nach einem der vorhergehenden Ansprüche, **dadurch gekennzeichnet, dass** Organe und Gewebe von Menschen oder Tieren, oder Teile davon, welche Menschen und Tieren transplantiert werden sollen, mit der Konservierungslösung gespült und in die Konservierungslösung eingetaucht werden.

12. Verwendung nach Anspruch 11, **dadurch gekennzeichnet, dass** Blutgefäße, oder Teile davon, mit der Konservierungslösung gespült und in die Konservierungslösung eingetaucht werden.

13. Verwendung nach Anspruch 11, **dadurch gekennzeichnet, dass** die Vena saphena magna, oder Teile davon, mit der Konservierungslösung gespült und in die Konservierungslösung eingetaucht werden.

14. Verwendung nach Anspruch 11, **dadurch gekennzeichnet, dass** Lungen mit der Konservierungslösung gespült und in die Konservierungslösung eingetaucht werden.

15. Verfahren zur Konservierung von Organen und Geweben von Menschen oder Tieren, oder Teile davon, **dadurch gekennzeichnet, dass** das Organ und das Gewebe mit einer Konservierungslösung nach einem der Ansprüche 1-10 gespült und in eine Konservierungslösung nach einem der Ansprüche 1-10 eingetaucht werden, und bei Langzeitkonservierung bei einer Temperatur von 0,5-8°C für höchstens 36 h, und bei Kurzzeitkonservierung bei einer Temperatur von 4-24°C für höchsten 2 h gelagert werden.

## Revendications

1. Solution de conservation pour des organes et des tissus ou des parties de ceux-ci d'êtres humains et d'animaux, **caractérisée en ce qu'**elle contient du calcium, au moins une substance colloïde-osmotiquement active et de la nitroglycérine.

2. Solution de conservation selon la revendication 1, **caractérisée en ce qu'**elle contient 0,3-1,5 mM de calcium, 10⁻⁷ M de nitroglycérine, rapporté à la solution de conservation finale.

3. Solution de conservation selon la revendication 2, **caractérisée en ce qu'**elle contient 0,7 mM de calcium et 10⁻⁵-10⁻⁶ M de nitroglycérine, rapporté à la solution de conservation finale.

4. Solution de conservation selon l'une quelconque des revendications précédentes, **caractérisée en ce qu'**elle contient facultativement également 1-12 IE/ml d'héparine et/ou 120 mg/l d'antibiotique, de préférence de benzylpénicilline, rapporté à la solution de conservation finale.

5. Solution de conservation selon l'une quelconque des revendications précédentes, **caractérisée en ce que** du calcium et de la nitroglycérine, et facultativement de l'héparine et/ou un antibiotique, sont présents dans une solution contenant 5-15 % en poids de dextrane de faible poids moléculaire ayant un poids moléculaire moyen d'environ 1 000 daltons, 3-8 % en poids de dextrane de poids moléculaire élevé ayant un poids moléculaire moyen de 40 000-120 000 daltons comme substance colloïde-osmotiquement active, 0,1-2,6 % de glucose, un tampon, 4-25 mM de potassium, 1-16 mM de magnésium, 50-150 mM de sodium et 50-150 mM de chlorure, rapporté à la solution de conservation finale.

6. Solution de conservation selon l'une quelconque des revendications 1-5, **caractérisée en ce que** du calcium et de la nitroglycérine, et facultativement de l'héparine et/ou un antibiotique, sont présents dans une solution contenant 50 g/l de dextrane 40 ayant un poids moléculaire de 40 000 daltons, 5 mM de glucose, 0,8 mM de tampon de phosphate, 6 mM de potassium, 0,8 mM de magnésium, 138 mM de sodium, 142 mM de chlore et 0,8 mM de sulfate, 0,24 ml de tampon THAM étant également ajouté, rapporté à la solution de conservation finale.

7. Solution de conservation selon l'une quelconque des revendications précédentes, **caractérisée en ce que** lorsqu'un coeur doit être stocké dans la solution de conservation, la concentration en potassium est de 16-25 mM et la concentration en magnésium est de 12-16 mM, rapporté à la solution de conservation finale.

8. Solution de conservation selon l'une quelconque des revendications précédentes, **caractérisée en ce que** son pH est de 7,4-7,6.

9. Solution de conservation selon l'une quelconque des revendications précédentes, **caractérisée en ce que** de l'héparine est remplacée par une héparine de faible poids moléculaire, de préférence la fragmine.

10. Solution de conservation selon l'une quelconque des revendications précédentes, **caractérisée en ce que** la substance colloïde-osmotiquement active est un dextrane de poids moléculaire élevé, de préférence le dextrane 40, le dextrane 60, le dextrane 70 ou le dextrane 120.

11. Utilisation d'une solution de conservation selon l'une quelconque des revendications précédentes, **caractérisée en ce que** des organes et des tissus ou des parties de ceux-ci d'êtres humains et d'animaux, lesquels doivent être transplantés chez des êtres humains et des animaux, sont rincées avec et immergées dans la solution de conservation.

12. Utilisation selon la revendication 11, **caractérisée en ce que** des vaisseaux sanguins ou des parties de ceux-ci sont rincées avec et immergées dans la solution de conservation.

13. Utilisation selon la revendication 11, **caractérisée en ce que** la veine saphène externe ou des parties de celle-ci sont rincées avec et immergées dans la solution de conservation.

14. Utilisation selon la revendication 11, **caractérisée en ce que** des poumons sont rincés avec et immergés dans la solution de conservation.

15. Procédé pour la conservation d'organes et de tissus ou de parties de ceux-ci d'êtres humains et d'animaux, **caractérisé en ce que** les organes et les tissus sont rincés avec et immergés dans une solution de conservation selon l'une quelconque des revendications 1 à 10 et sont stockés à une température de 0,5-8°C pendant au plus 36 h pour une conservation à long terme ou à une température de 4-24°C pendant au plus 2 h pour une conservation à court terme.
